# EUROPEAN PATENT APPLICATION

(11) **EP 4 603 222 A1**
(43) Date of publication of application: **20.08.2025**
(21) Application number: 23877041.6
(22) Date of filing: 31.08.2023
(51) Int. Cl.: B23K 26/38, B23K 26/082

(54) **LASER MACHINING APPARATUS, LASER MACHINING METHOD, MACHINING PROGRAM CREATION METHOD, AND MACHINING PROGRAM CONFIGURATION METHOD**

(30) Priority: 14.10.2022 JP 2022165552
(71) Applicant: Amada Co., Ltd., Isehara-shi, Kanagawa 259-1196 (JP)
(72) Inventor: IRIE, Shin, Isehara-shi, Kanagawa 259-1196 (JP); KIKUCHI, Akira, Isehara-shi, Kanagawa 259-1196 (JP); UEHARA, Masanori, Isehara-shi, Kanagawa 259-1196 (JP); IGARASHI, Kaori, Isehara-shi, Kanagawa 259-1196 (JP); NAKAMURA, Shotaro, Isehara-shi, Kanagawa 259-1196 (JP)
(74) Representative: Grünecker Patent- und Rechtsanwälte PartG mbB
(86) International application number: PCT/JP2023/031970
(87) International publication number: WO 2024/080034

(57) **Abstract**

A control device (NC device (50)) controls a movement mechanism such that a processing head (35) is positionally fixed. The control device controls a laser oscillator (10) so as to turn on a laser beam at a processing start position in a hole formation region in which a hole is formed. The control device controls a beam vibration mechanism (galvano scanner unit (32)) so as to form an approach by moving the laser beam from the processing start position to an end of the hole formation region, and to form the hole in a material to be cut (sheet metal (W)) by moving the laser beam in a circular manner along a whole circumference end of the hole formation region. The control device controls a height adjustment mechanism (38) such that a distance between a tip of a nozzle (36) and a surface of the material to be cut is set to a fixed distance of 1.0 mm or more and 6.0 mm or less from a processing start of the hole, which starts a laser beam irradiation at the processing start position, until a formation of the hole is completed.

## Description

### [TECHNICAL FIELD]

The present disclosure relates to a laser processing machine, a laser processing method, a processing program creation method, and a processing program configuration method.

### [BACKGROUND ART]

As disclosed in Patent Literature 1, a laser processing machine provided with a galvano scanner unit has been put into practical use. Patent Literature 1 discloses that a hole smaller than a diameter of an opening is formed by moving a laser beam in a circular manner that is emitted from the opening of a nozzle attached to the tip of a processing head by means of the galvano scanner unit in a state in which the processing head is stopped. According to the laser processing method for forming a hole smaller than the diameter of the opening, the processing time for forming a hole can be greatly reduced compared with the laser processing method for forming a hole while moving the processing head.

Further, Patent Literature 1 discloses that the laser beam is turned on at the center of the opening, and the laser beam is displaced by the galvano scanner unit in the direction of the end of the opening by the distance of the radius of the hole to be formed, thereby moving the laser beam in a circular manner.

### [Citation List]

### [Patent Literature]

[Patent Literature 1] WO 2021-112039 A
[Patent Literature 2] Japanese Unexamined Patent Application Publication No. H09-220683
[Patent Literature 3] Japanese Unexamined Patent Application Publication No. 2019-195831
[Patent Literature 4] Japanese Unexamined Patent Application Publication No. H08-118048

### [SUMMARY OF INVENTION]

As described in Patent Literature 2, in the laser processing method for forming a hole while moving the processing head, the distance between the tip of the nozzle and the surface of the sheet metal is set to a very close distance such as 0.3 mm. Normally, when cutting a product having an opening from the sheet metal, the laser processing machine pierces the inside of the region in which the opening is to be formed, forms an approach from the pierced hole to the end of the region in which the opening is formed, and cuts the sheet metal along the region in which the opening is to be formed.

From the matters disclosed in paragraph 0051 of Patent Literature 3, it is understood that the processing of the sheet metal performed by a conventional laser processing machine is carried out as follows. When piercing a hole, the laser processing machine sets a distance between the tip of the nozzle and the surface of the sheet metal longer than a distance in the normal cutting. The laser processing machine makes the distance between the tip of the nozzle and the surface of the sheet metal close (for example, 0.3 mm) when forming the approach and when performing the normal cutting for cutting the outer or inner periphery of the product.

Based on the above matters known to those skilled in the art, it is conceivable that when forming a hole in the sheet metal by moving the laser beam in a circular manner by means of the galvano scanner unit in a state in which the processing head is stopped, the distance between the tip of the nozzle and the surface of the sheet metal is set as follows.

In the laser processing machine, the distance between the tip of the nozzle and the surface of the sheet metal is relatively long only when a pierced hole is formed. In the laser processing machine, the distance between the tip of the nozzle and the surface of the sheet metal is set to a very close distance, such as 0.3 mm, when the laser beam is displaced in the direction of the end of the opening and when the laser beam is moved in a circular manner. However, if the processing head is moved in the height direction to change the distance between the tip of the nozzle and the surface of the sheet metal, the processing speed decreases. Therefore, it is conceivable that the laser processing machine can set the distance between the tip of the nozzle and the surface of the sheet metal to be extremely close, such as 0.3 mm, from the time the laser beam is turned on at the center of the opening until the cutting of the hole is completed.

The present inventors have tested that the distance between the tip of the nozzle and the surface of the sheet metal is set to be close from the time the laser beam is turned on at the center of the opening until the cutting of the hole is completed, and that the laser beam is moved in a circular manner by the laser processing machine in a state in which the processing head is stopped, and that the processing for forming the hole in the sheet metal is repeated many times. As a result, the present inventors have found out that spatter may be deposited in the nozzle, which makes the processing difficult to perform continuously. Therefore, it is required that even if the processing for forming the hole of a predetermined shape that fits within the opening range of the nozzle in the sheet metal is repeated many times in a state in which the processing head is stopped, the spatter is hardly deposited in the nozzle, thereby enabling the state to continue the processing for a long time.

A first aspect of one or more embodiments provides a laser processing machine including: a laser oscillator configured to emit a laser beam; a processing head having a nozzle attached to a tip of the processing head, which emits a laser beam emitted from the laser oscillator from an opening of the nozzle; a movement mechanism configured to move the processing head along a surface of a material to be cut; a height adjustment mechanism configured to adjust a position of the processing head in a height direction; a beam vibration mechanism configured to vibrate a laser beam emitted from the opening within the opening; and a control device configured to control the laser oscillator, the movement mechanism, the height adjustment mechanism, and the beam vibration mechanism, in which when forming a hole that fits within a range of the opening in the material to be cut, the control device is configured to control: the movement mechanism such that the processing head is positionally fixed; the laser oscillator so as to turn on a laser beam at a processing start position in a hole formation region in which the hole is formed; the beam vibration mechanism so as to form an approach by moving a laser beam from the processing start position to an end of the hole formation region, and to form the hole in the material to be cut by moving a laser beam along a whole circumference end of the hole formation region; and the height adjustment mechanism such that a distance between a tip of the nozzle and a surface of the material to be cut is set to a fixed distance of 1.0 mm or more and 6.0 mm or less from a processing start of the hole, which starts a laser beam irradiation at the processing start position, until a formation of the hole is completed.

According to the first aspect of one or more embodiments, the control device controls the movement mechanism such that the processing head is positionally fixed, and controls the beam vibration mechanism so as to form a hole that fits within a range of the opening of the nozzle in the material to be cut, thereby forming the hole having a diameter smaller than the diameter of the opening of the nozzle in the material to be cut in a short time. According to the first aspect of one or more embodiments, a distance between the tip of the nozzle and the surface of the material to be cut is set to a fixed distance of 1.0 mm or more and 6.0 mm or less from a processing start of the hole until a formation of the hole is completed, and thus spatter is hardly deposited in the nozzle, thereby enabling the state to continue the processing for a long time.

A second aspect of one or more embodiments provides a laser processing method including: stopping a processing head; setting a distance between a tip of a nozzle attached to the processing head and a surface of a material to be cut to a fixed distance of 1.0 mm or more and 6.0 mm or less; turning on a laser beam at a processing start position in a hole formation region in which a hole is formed fitting within a range of an opening of the nozzle, and starting a laser beam irradiation at the processing start position; forming an approach by moving a laser beam from the processing start position to an end of the hole formation region; and forming the hole in the material to be cut by moving a laser beam along a whole circumference end of the hole formation region.

According to the second aspect of one or more embodiments, the processing head is stopped, and the hole having a diameter smaller than the diameter of the opening of the nozzle is formed by moving the laser beam in a circular manner along a whole circumference end of the hole formation region, thereby forming the hole having a diameter smaller than the diameter of the opening of the nozzle in the material to be cut in a short time. According to the second aspect of one or more embodiments, a distance between the tip of the nozzle and the surface of the material to be cut is set to a fixed distance of 1.0 mm or more and 6.0 mm or less, and the hole having a diameter smaller than the diameter of the opening of the nozzle is formed, and thus spatter is hardly deposited in the nozzle, thereby enabling the state to continue the processing for a long time.

A third aspect of one or more embodiments provides a processing program creation method including: when forming a hole of a predetermined shape by irradiating a material to be cut with a laser beam emitted from a processing head, in a state in which the processing head is stopped, setting whether to enable or disable execution of head fixed hole processing that forms the hole by moving a position on the material to be cut, which is irradiated with the laser beam, within a range of an opening of a nozzle attached to a tip of the processing head; setting a shape of a target hole that enables execution of the head fixed hole processing; setting a minimum size and a maximum size of the target hole; setting a coefficient that determines a circulation time for moving the laser beam that is in an ON state along a whole circumference end of the target hole to be formed in the material to be cut; and when execution of the head fixed hole processing is set to be enabled, and when a specific hole to be formed in the material to be cut is the target hole, and when a size of the specific hole is equal to or greater than a minimum size and equal to or less than a maximum size, creating a processing program such that a code for commanding formation of the specific hole includes a statement in which a first address word that specifies the size of the specific hole, a second address word that commands the execution of the head fixed hole processing, and a third address word that indicates the coefficient are linked in a discretionary order.

According to the third aspect of one or more embodiments, it is possible to create the processing program suitable for forming the hole within the range of the opening of the nozzle in the material to be cut by the head fixed hole processing after setting various conditions for executing the head fixed hole processing.

A fourth aspect of one or more embodiments provides a processing program configuration method including: configuring a processing program such that a code for commanding formation of a hole of a predetermined shape in a material to be cut by moving a processing head configured to emit a laser beam includes a statement in which: a first address word that specifies a size of the hole; a second address word that commands execution of head fixed hole processing that forms the hole by moving a position on the material to be cut, which is irradiated with the laser beam, within a range of an opening of a nozzle attached to a tip of the processing head in a state in which the processing head is stopped; and a third address word that indicates a coefficient that determines a circulation time for moving the laser beam that is in an ON state along a whole circumference end of the target hole to be formed in the material to be cut, are linked in a discretionary order.

According to the fourth aspect of one or more embodiments, it is not necessary to newly define a code for the head fixed hole processing, and the processing program for the head fixed hole processing can be configured using an existing code for commanding the formation of a hole in the material to be cut by moving the processing head.

In accordance with the laser processing machine and the laser processing method according to one or more embodiments, even if the processing for forming a hole of a predetermined shape that fits within the opening range of the nozzle in the sheet metal is repeated many times in a state in which the processing head is stopped, spatter is hardly deposited in the nozzle, thereby enabling the state to continue the processing for a long time. In accordance with the processing program creation method according to one or more embodiments, the processing program suitable for the laser processing machine and the laser processing method according to one or more embodiments can be created. In accordance with the processing program configuration method according to one or more embodiments, the processing program suitable for the laser processing machine and the laser processing method according to one or more embodiments can be configured.

### [BRIEF DESCRIPTION OF DRAWINGS]

[FIG. 1] FIG. 1 is a diagram illustrating a laser processing machine according to one or more embodiments.
[FIG. 2] FIG. 2 is a conceptual diagram illustrating a height adjustment mechanism that adjusts the position of a processing head in a height direction.
[FIG. 3] FIG. 3 is a perspective view illustrating a detailed configuration example of a collimator unit and the processing head in the laser processing machine.
[FIG. 4] FIG. 4 is a diagram for explaining the displacement of the irradiation position of a laser beam onto a sheet metal performed by a beam vibration mechanism.
[FIG. 5A] FIG. 5A is a diagram illustrating an example of a hole, which is formed in a sheet metal, having a diameter smaller than the diameter of an opening of a nozzle.
[FIG. 5B] FIG. 5B is a diagram illustrating a hole formation region before the hole illustrated in FIG. 5A is formed in the sheet metal.
[FIG. 6A] FIG. 6A is a diagram illustrating a first example of an arc-shaped trajectory drawn by a laser beam when the laser beam forms a hole having a diameter smaller than the diameter of the opening of the nozzle.
[FIG. 6B] FIG. 6B is a diagram illustrating a second example of an arc-shaped trajectory drawn by a laser beam when the laser beam forms a hole having a diameter smaller than the diameter of the opening of the nozzle.
[FIG. 7] FIG. 7 is a diagram illustrating a process of forming a pierced hole, an approach and a whole circumference cutting groove in the sheet metal using the first example illustrated in FIG. 6A.
[FIG. 8A] FIG. 8A is a diagram illustrating a first example of a spiral trajectory drawn by a laser beam when the laser beam forms a hole having a diameter smaller than the diameter of the opening of the nozzle.
[FIG. 8B] FIG. 8B is a diagram illustrating a second example of a spiral trajectory drawn by a laser beam when the laser beam forms a hole having a diameter smaller than the diameter of the opening of the nozzle.
[FIG. 8C] FIG. 8C is a diagram illustrating a third example of a spiral trajectory drawn by a laser beam when the laser beam forms a hole having a diameter smaller than the diameter of the opening of the nozzle.
[FIG. 8D] FIG. 8D is a diagram illustrating a fourth example of a spiral trajectory drawn by a laser beam when the laser beam forms a hole having a diameter smaller than the diameter of the opening of the nozzle.
[FIG. 9] FIG. 9 is a block diagram illustrating a specific configuration example of a CAM device.
[FIG. 10] FIG. 10 is a diagram illustrating an example of a setting image used by the CAM device at a stage prior to creating a processing program.
[FIG. 11] FIG. 11 is a diagram illustrating an example of a processing program for forming a plurality of holes having a diameter smaller than the diameter of the opening of the nozzle in the sheet metal.
[FIG. 12] FIG. 12 is a diagram illustrating a state in which a plurality of holes are formed in the sheet metal by the processing program illustrated in FIG. 11.

### [DESCRIPTION OF EMBODIMENTS]

A laser processing machine according to one or more embodiments includes a laser oscillator, a processing head, a movement mechanism, a height adjustment mechanism, and a control device. The laser oscillator emits a laser beam. The processing head has a nozzle attached to a tip of the processing head, which emits a laser beam emitted from the laser oscillator from an opening of the nozzle. The movement mechanism moves the processing head along a surface of a sheet metal. The height adjustment mechanism adjusts a position of the processing head in a height direction. The beam vibration mechanism vibrates a laser beam emitted from the opening within the opening. The control device controls the laser oscillator, the movement mechanism, the height adjustment mechanism, and the beam vibration mechanism.

When forming a hole that fits within a range of the opening in the material to be cut, the control device controls the movement mechanism such that the processing head is positionally fixed, and controls the laser oscillator so as to turn on a laser beam at a processing start position in a hole formation region in which the hole is formed. The control device controls the beam vibration mechanism so as to form an approach by moving a laser beam from the processing start position to an end of the hole formation region, and to form the hole in the material to be cut by moving a laser beam along a whole circumference end of the hole formation region. The control device controls the height adjustment mechanism such that a distance between a tip of the nozzle and a surface of the material to be cut is set to a fixed distance of 1.0 mm or more and 6.0 mm or less from a processing start of the hole, which starts a laser beam irradiation at the processing start position, until a formation of the hole is completed.

A laser processing method according to one or more embodiments includes: stopping a processing head; setting a distance between a tip of a nozzle attached to the processing head and a surface of a material to be cut to a fixed distance of 1.0 mm or more and 6.0 mm or less; turning on a laser beam at a processing start position in a hole formation region in which a hole is formed fitting within a range of an opening of the nozzle, and starting a laser beam irradiation at the processing start position; forming an approach by moving a laser beam from the processing start position to an end of the hole formation region; and forming the hole in the material to be cut by moving a laser beam along a whole circumference end of the hole formation region.

A processing program creation method according to one or more embodiments includes: when forming a hole of a predetermined shape by irradiating a material to be cut with a laser beam emitted from a processing head, in a state in which the processing head is stopped, setting whether to enable or disable execution of head fixed hole processing that forms the hole by moving a position on the material to be cut, which is irradiated with the laser beam, within a range of an opening of a nozzle attached to a tip of the processing head. The processing program creation method according to 1 or more embodiments includes: setting a shape of a target hole that enables execution of the head fixed hole processing; setting a minimum size and a maximum size of the target hole; and setting a coefficient that determines a circulation time for moving the laser beam that is in an ON state along a whole circumference end of the target hole to be formed in the material to be cut.

The processing program creation method according to one or more embodiments includes, when execution of the head fixed hole processing is set to be enabled, and when a specific hole to be formed in the material to be cut is the target hole, and when a size of the specific hole is equal to or greater than a minimum size and equal to or less than a maximum size, creating a processing program such that a code for commanding formation of the specific hole includes a statement in which a first address word that specifies the size of the specific hole, a second address word that commands the execution of the head fixed hole processing, and a third address word that indicates the coefficient are linked in a discretionary order.

A processing program configuration method according to one or more embodiments includes configuring a processing program such that a code for commanding formation of a hole of a predetermined shape in a material to be cut by moving a processing head configured to emit a laser beam includes a statement in which a first address word, a second address word, a third address word are linked in a discretionary order. The first address word specifies a size of the hole. The second address word commands execution of head fixed hole processing that forms the hole by moving a position on the material to be cut, which is irradiated with the laser beam, within a range of an opening of a nozzle attached to a tip of the processing head in a state in which the processing head is stopped. The third address word indicates a coefficient that determines a circulation time for moving the laser beam that is in an ON state along a whole circumference end of the target hole to be formed in the material to be cut.

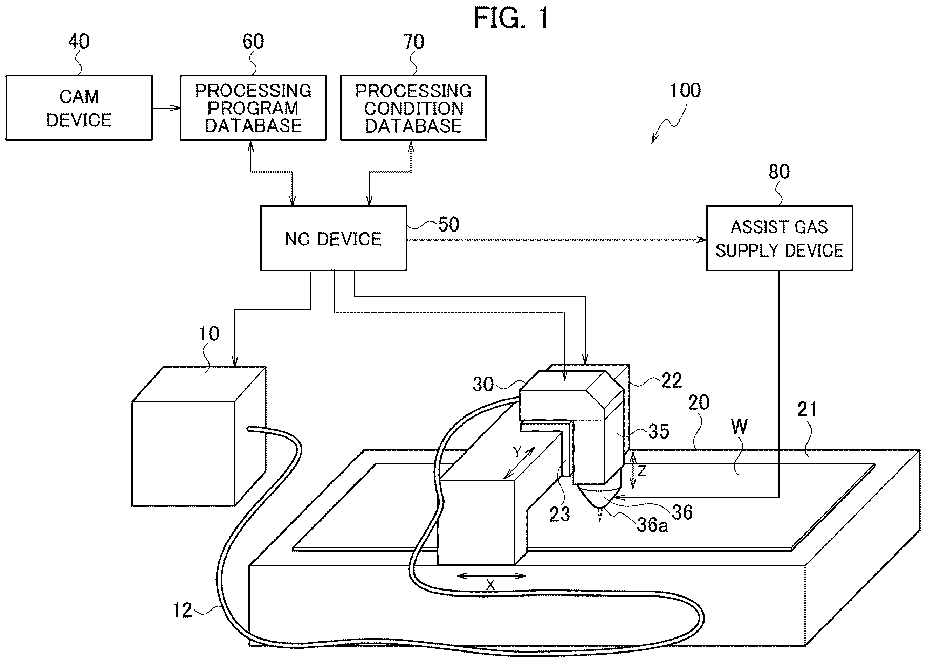

Hereinafter, a laser processing machine, a laser processing method, a processing program creation method, and a processing program configuration method according to one or more embodiments will be described in detail with reference to the accompanying drawings. First, a laser processing machine according to one or more embodiments will be described with reference to FIGS. 1 to 4. FIG. 1 illustrates a laser processing machine 100 which is a configuration example of a laser processing machine according to one or more embodiments.

In FIG. 1, the laser processing machine 100 includes a laser oscillator 10, a process fiber 12, a laser processing unit 20, an NC device 50, and an assist gas supply device 80. The laser oscillator 10 generates and emits a laser beam. The process fiber 12 transmits the laser beam emitted from the laser oscillator 10 to the laser processing unit 20. The NC device 50 is an example of a control device that controls each unit of the laser processing machine 100.

A processing program database 60 and a processing condition database 70 are connected to the NC device 50. The processing program database 60 and the processing condition database 70 may be connected to the laser processing machine 100 via a network. A computer aided manufacturing (CAM) device 40 that creates a processing program described later is connected to the processing program database 60. The CAM device 40 may be connected to the processing program database 60 via a network. The processing program database 60 stores the processing program created by the CAM device 40.

The CAM device 40 is configured of computer devices that execute the CAM program. The CAM device 40 creates a processing program by executing the processing program creation method according to one or more embodiments. The processing program created by the CAM device 40 will be described later.

The laser oscillator 10 is preferably a laser oscillator that amplifies excitation light emitted from a laser diode and emits a laser beam of a predetermined wavelength, or a laser oscillator that directly utilizes a laser beam emitted from a laser diode. The laser oscillator 10 is a solid-state laser oscillator, a fiber laser oscillator, a disk laser oscillator, or a direct diode laser oscillator (DDL oscillator), for example.

The laser oscillator 10 emits a laser beam in a band of 1 µm with a wavelength of 900 nm to 1100 nm. Taking the fiber laser oscillator and the DDL oscillator as examples, the fiber laser oscillator emits a laser beam with a wavelength of 1060 nm to 1080 nm, and the DDL oscillator emits a laser beam with a wavelength of 910 nm to 950 nm.

The laser processing unit 20 includes a processing table 21 on which a sheet metal W which is a material to be cut is mounted, a gate-type X-axis carriage 22, a Y-axis carriage 23, a collimator unit 30 fixed to the Y-axis carriage 23, and a processing head 35. The X-axis carriage 22 is configured to be movable in the X-axis direction on the processing table 21. The Y-axis carriage 23 is configured to be movable in the Y-axis direction perpendicular to the X-axis on the X-axis carriage 22. The X-axis carriage 22 and the Y-axis carriage 23 function as a movement mechanism for moving the processing head 35 along the surface of the sheet metal W in the X-axis direction, the Y-axis direction, or any combination direction of the X-axis direction and the Y-axis direction.

Instead of moving the processing head 35 along the surface of the sheet metal W, the processing head 35 may be positionally fixed and configured such that the sheet metal W moves. The laser processing machine 100 may be provided with a movement mechanism for moving the processing head 35 relative to the surface of the sheet metal W. The NC device 50 controls the movement of the processing head 35 performed by the movement mechanism (the X-axis carriage 22 and the Y-axis carriage 23).

A nozzle 36, which has a circular opening 36a at a tip of the processing head 35 and emits a laser beam from the opening 36a, is attached to the processing head 35. The sheet metal W is irradiated with the laser beam emitted from the opening 36a of the nozzle 36. The assist gas supply device 80 supplies nitrogen, oxygen, mixed gas of nitrogen and oxygen, or air as assist gas to the processing head 35. When processing the sheet metal W, the assist gas is blown onto the sheet metal W through the opening 36a. The assist gas discharges molten metal within a kerf width where the sheet metal W has melted.

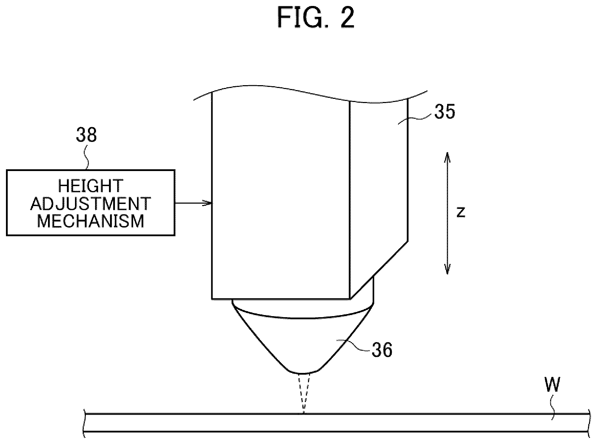

FIG. 2 is a conceptual diagram illustrating a height adjustment mechanism 38 that adjusts the position of the processing head 35 in the height direction. As illustrated in FIG. 2, the laser processing unit 20 has the height adjustment mechanism 38 that adjusts the position of the processing head 35 in the height direction. The height direction is the Z-axis direction perpendicular to the X-axis and Y-axis. Specifically, the processing head 35 is movable in the Z-axis direction by a ball screw or a rack and pinion, and the height adjustment mechanism 38 moves the processing head 35 in the Z-axis direction by a servo motor or a linear motor. At least a part of the height adjustment mechanism 38 may be present in the processing head 35.

The distance between the tip of the nozzle 36 and the surface of the sheet metal W is adjusted by the height adjustment mechanism 38 that adjusts the position of the processing head 35 in the Z-axis direction. The NC device 50 controls the position of the processing head 35 in the Z-axis direction performed by the height adjustment mechanism 38.

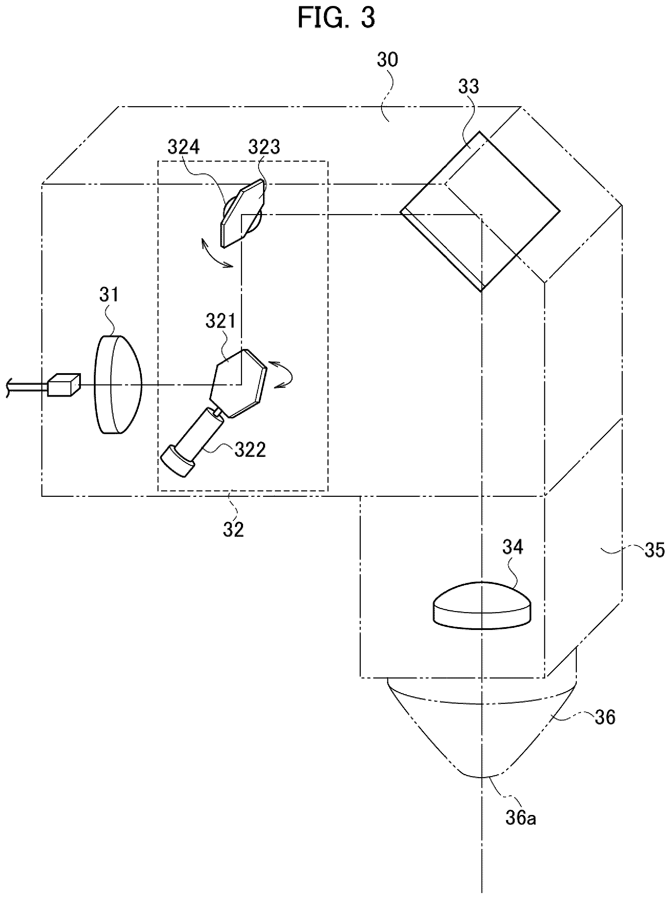

FIG. 3 is a perspective view illustrating a detailed configuration example of the collimator unit 30 and the processing head 35 in the laser processing machine 100. As illustrated in FIG. 3, the collimator unit 30 includes a collimation lens 31 that converts a laser beam of divergent light emitted from the process fiber 12 into parallel light (collimated light). The collimator unit 30 also includes a galvano scanner unit 32, and a bend mirror 33 which reflects the laser beam emitted from the galvano scanner unit 32 downward in the Z-axis direction. The processing head 35 includes a focusing lens 34 that focuses the laser beam reflected by the bend mirror 33 and irradiates the sheet metal W with the laser beam.

In order to adjust the focal position of the laser beam, the focusing lens 34 is configured to be movable in a direction approaching the sheet metal W and in a direction away from the sheet metal W by an unillustrated drive unit and an unillustrated movement mechanism.

The laser processing machine 100 is centered such that the laser beam emitted from the opening 36a of the nozzle 36 is positioned at the center of the opening 36a. In a reference state, the laser beam is emitted from the center of the opening 36a. The galvano scanner unit 32 functions as a beam vibration mechanism which vibrates the laser beam, which is advanced in the processing head 35 and is emitted from the opening 36a, in the opening 36a.

The galvano scanner unit 32 includes a scan mirror 321 which reflects the laser beam emitted from the collimation lens 31, and a drive unit 322 which rotates the scan mirror 321 to a predetermined angle. In addition, the galvano scanner unit 32 includes a scan mirror 323 which reflects the laser beam emitted from the scan mirror 321, and a drive unit 324 which rotates the scan mirror 323 to a predetermined angle. The drive units 322 and 324 can be configured by a motor.

The drive units 322 and 324 can reciprocate the scan mirrors 321 and 323 in a predetermined angle range, respectively, based on the control performed by the NC device 50. By reciprocating either or both of the scan mirror 321 and the scan mirror 323, the galvano scanner unit 32 vibrates the laser beam with which the sheet metal W is irradiated.

The galvano scanner unit 32 is an example of a beam vibration mechanism, and the beam vibration mechanism is not limited to the galvano scanner unit 32 having a pair of scan mirrors.

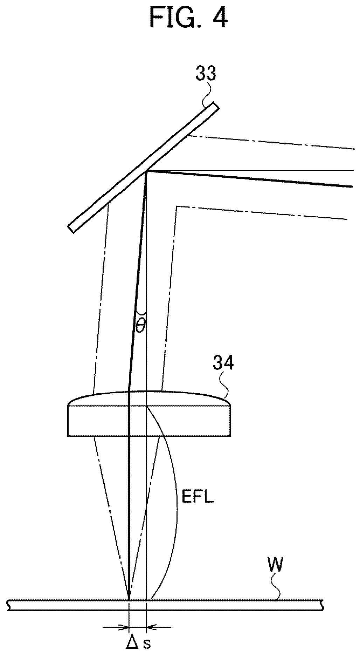

FIG. 4 is a diagram for explaining the displacement of the irradiation position of the laser beam onto the sheet metal W performed by the beam vibration mechanism. FIG. 4 illustrates a state in which either or both of the scan mirror 321 and the scan mirror 323 are inclined and the position of the laser beam with which the sheet metal W is irradiated is displaced. In FIG. 4, a thin solid line that is bent by the bend mirror 33 and passes through the focusing lens 34 indicates the optical axis of the laser beam when the laser processing machine 100 is in a reference state.

In detail, the angle of the optical axis of the laser beam incident on the bend mirror 33 changes due to the operation of the galvano scanner unit 32 positioned in front of the bend mirror 33, and the optical axis deviates from the center of the bend mirror 33. In FIG. 4, for the sake of simplicity, the incident position of the laser beam onto the bend mirror 33 is the same before and after the operation of the galvano scanner unit 32.

It is assumed that the optical axis of the laser beam is displaced from the position indicated by the thin solid line to the position indicated by the thick solid line, by the action of the galvano scanner unit 32. If the laser beam reflected by the bend mirror 33 is inclined at an angle θ, the irradiation position of the laser beam onto the sheet metal W is displaced by a distance Δs. When the focal length of the focusing lens 34 is effective focal length (EFL), the distance Δs is calculated by EFL × sinθ.

If the galvano scanner unit 32 inclines the laser beam by an angle θ in the direction opposite to the direction illustrated in FIG. 4, the irradiation position of the laser beam onto the sheet metal W can be displaced by the distance Δs in the direction opposite to the direction illustrated in FIG. 4. The distance Δs is a distance less than a radius of the opening 36a, and is preferably a distance less than or equal to a maximum distance when the maximum distance is a distance obtained by subtracting a predetermined margin from the radius of the opening 36a.

The NC device 50 can vibrate the laser beam in an inplane predetermined direction of the sheet metal W by controlling the drive units 322 and 324 of the galvano scanner unit 32. By vibrating the laser beam, the beam spot formed on the surface of the sheet metal W can be vibrated. The galvano scanner unit 32 can move the position of the laser beam with which the sheet metal W is irradiated, that is, the position of the beam spot formed on the surface of the sheet metal W based on the control by the NC device 50.

The laser processing machine 100 configured as described above cuts the sheet metal W using the laser beam emitted from the laser oscillator 10 to produce a product having a predetermined shape. The laser processing machine 100 cuts the sheet metal while vibrating the laser beam in a predetermined trajectory pattern by positioning the focus of the laser beam at any appropriate position within the thickness of the sheet metal W from among the upper surface of the sheet metal W, above the upper surface by a predetermined distance, or below the upper surface by a predetermined distance.

A processing program for cutting the sheet metal W is stored in the processing program database 60. The NC device 50 reads out the processing program from the processing program database 60 and selects one of a plurality of processing condition files stored in the processing condition database 70. Various processing conditions are set in the processing condition file. The NC device 50 controls the laser processing machine 100 to cut the sheet metal W based on the readout processing program and the processing conditions set in the selected processing condition file. The processing condition file selected by the NC device 50 is specified in the processing program.

A laser processing method according to one or more embodiments will be described as a preferred operation of the laser processing machine 100 configured as described above so as to form a hole that fits within the range of the opening 36a of the nozzle 36 in the sheet metal W. Here, an example of a hole that fits within the range of the opening 36a is a round hole having a diameter smaller than the diameter of the opening 36a. The hole that fits within the range of the opening 36a is not limited to a round hole (a perfect circle), and may be any shape such as an oblong hole, an ellipse, a square, a rectangle, a polygon with five or more sides.

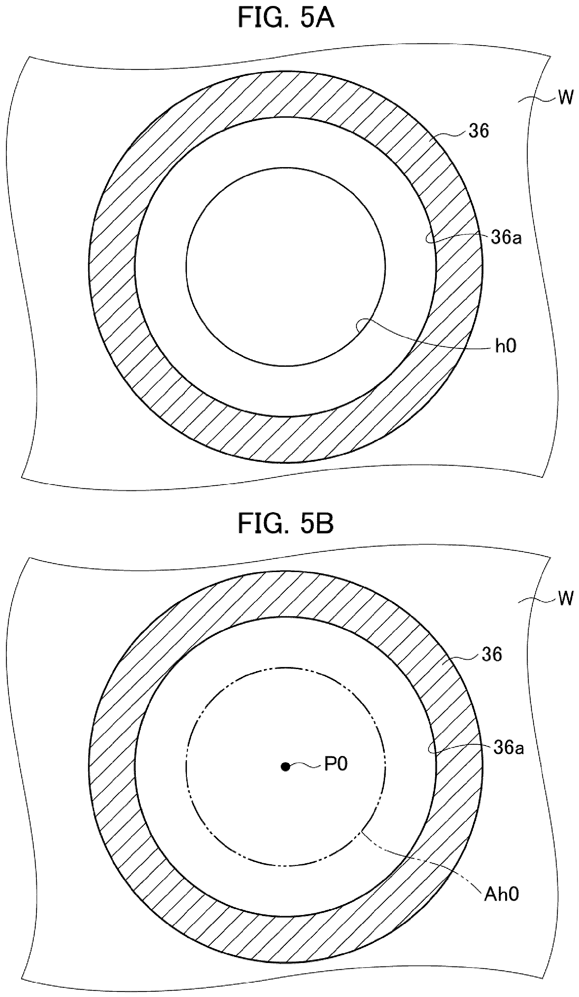

FIG. 5A illustrates an example of a round hole, which is formed in the sheet metal W, having a diameter smaller than the diameter of the opening 36a of the nozzle 36. FIG. 5B illustrates a hole formation region before the round hole illustrated in FIG. 5A is formed in the sheet metal W. As illustrated in FIG. 5A, the laser processing machine 100 forms a round hole h0 having a diameter smaller than the diameter of the opening 36a of the nozzle 36 in the sheet metal W. As illustrated in FIG. 5B, the region where the round hole h0 is formed before the round hole h0 is formed in the sheet metal W is referred to as a hole formation region Ah0.

The NC device 50 positions the processing head 35 directly above the hole formation region Ah0 without displacing the position of the laser beam with which the sheet metal W is irradiated by the galvano scanner unit 32. At this time, the processing head 35 is positionally fixed at a position where, for example, the laser beam emitted from the nozzle 36 is irradiated to the center of the hole formation region Ah0. In this state, the NC device 50 controls the laser oscillator 10 to turn on the laser beam. Then, as illustrated in FIG. 5B, the position where the laser beam is irradiated in the hole formation region Ah0 becomes a processing start position P0.

The NC device 50 controls the X-axis carriage 22 and the Y-axis carriage 23 such that the processing head 35 is positionally fixed in the direction of the surface of the sheet metal W until the formation of the round hole h0 is completed after the irradiation of the laser beam is started at the processing start position P0. In the processing program, the command not to move the position of the processing head 35 in the direction of the surface of the sheet metal W is given.

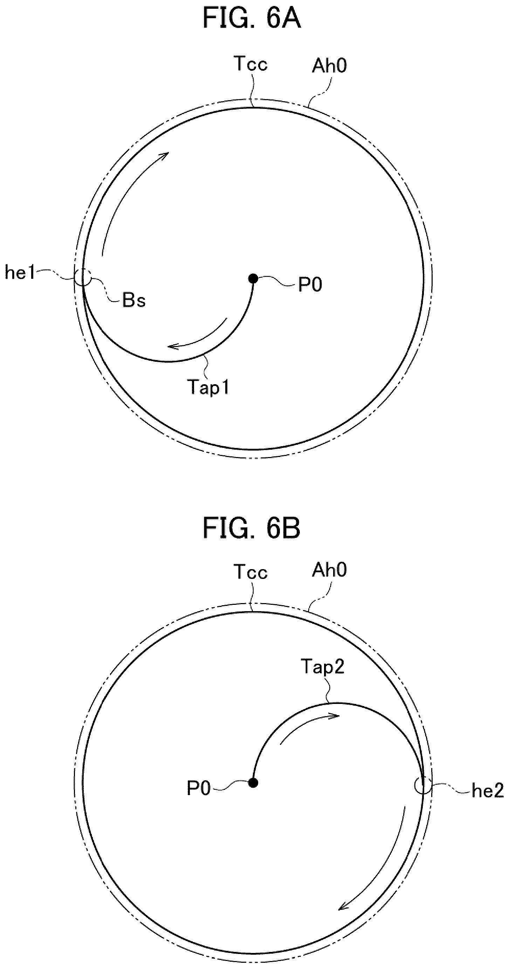

FIGS. 6A and 6B illustrate, respectively, the first example and the second example of arc-shaped trajectories formed by displacement of the laser beam with which the sheet metal W is irradiated by the NC device 50 controlling the galvano scanner unit 32. As illustrated in FIGS. 6A and 6B, in order to form a hole of the size of the round hole h0 in the sheet metal W, it is necessary to move the position of a beam spot Bs which is displaced inward by the radius of the beam spot Bs from the hole formation region Ah0 in a circular manner.

In FIG. 6A, the NC device 50 controls the galvano scanner unit 32, and displaces the beam spot Bs such that the beam spot Bs positioned at the processing start position P0 draws an arc-shaped trajectory Tap1 until the end he1 of the hole formation region Ah0. Subsequently, the NC device 50 controls the galvano scanner unit 32, and moves the beam spot Bs such that the beam spot Bs moves in a circular manner along the whole circumference end of the hole formation region Ah0 (inner circumferential end) to draw a whole circumference trajectory Tcc.

In FIG. 6B, the NC device 50 controls the galvano scanner unit 32, and displaces the beam spot Bs such that the beam spot Bs positioned at the processing start position P0 draws an arc-shaped trajectory Tap2 until the end he2 of the hole formation region Ah0. Subsequently, the NC device 50 controls the galvano scanner unit 32, and moves the beam spot Bs such that the beam spot Bs moves in a circular manner along the whole circumference end of the hole formation region Ah0 (inner circumferential end) to draw the whole circumference trajectory Tcc.

The NC device 50 controls the height adjustment mechanism 38 such that the distance between the tip of the nozzle 36 and the surface of the sheet metal W is set to a fixed distance of 1.0 mm or more and 6.0 mm or less from the start of laser beam irradiation at the processing start position P0 until the formation of the round hole h0 is completed. Thus, even if the processing for forming the round hole h0 in the sheet metal W is repeated many times, spatter is hardly deposited in the nozzle 36 as compared with when the distance between the tip of the nozzle 36 and the surface of the sheet metal W is set to a very close distance such as 0.3 mm, thereby enabling the state to continue the processing for a long time.

Although not illustrated in FIG. 3, a protective glass is disposed between the focusing lens 34 and the nozzle 36 for protection to prevent spatter from adhering to the focusing lens 34. When the distance between the tip of the nozzle 36 and the surface of the sheet metal W is set to 1.0 mm or more and 6.0 mm or less, the amount of spatter scattered to the nozzle 36 can be reduced, and thus the amount of the spatter scattered to the protective glass is reduced, thereby making it less likely that the protective glass will be contaminated. The distance between the tip of the nozzle 36 and the surface of the sheet metal W is set to 1.0 mm or more because if the distance is set to less than 1.0 mm, the amount of spatter scattered to the nozzle 36 or to the protective glass greatly increases. The distance between the tip of the nozzle 36 and the surface of the sheet metal W is set to 6.0 mm or less because if the distance exceeds 6.0 mm, the amount of dross adhering to the sheet metal W greatly increases.

It is preferable that the distance between the tip of the nozzle 36 and the surface of the sheet metal W be set to 3.0 mm or more and 5.0 mm or less. When the distance between the tip of the nozzle 36 and the surface of the sheet metal W is set to 3.0 mm or more, the mount of spatter scattered to the nozzle 36 or to the protective glass can be greatly reduced, thereby enabling the state to continue the processing for a long time. When the distance between the tip of the nozzle 36 and the surface of the sheet metal W is set to 5.0 mm or less, the processing quality of the sheet metal W can be improved.

It is preferable that the NC device 50 control the galvano scanner unit 32 so as to move the laser beam to the end he1 or he2 of the hole formation region Ah0 after irradiating the sheet metal W with the laser beam for a predetermined time exceeding 0 at the processing start position P0. When the laser beam is turned on at the processing start position P0 and the laser beam is moved to the end he1 or he2 at the same time, spatter generated at and around the processing start position P0 tends to be concentrated in a certain direction and scattered. In contrast, if the sheet metal W is irradiated with the laser beam for a predetermined time exceeding 0 at the processing start position P0 and a recess of a predetermined depth is at least formed at the processing start position P0, the spatter generated at and around the processing start position P0 tends to be dispersed in a plurality of directions.

It is preferable that the NC device 50 control the galvano scanner unit 32 so as to irradiate the sheet metal W with the laser beam for a time sufficient for forming a pierced hole at the processing start position P0. As an example, after the laser beam is turned on at the processing start position P0, the NC device 50 controls the galvano scanner unit 32 such that the position of the laser beam is not displaced by 5 ms by setting a dwell of, for example, 5 ms. If a pierced hole is formed at the processing start position P0 by setting a dwell of 5 ms, for example, at the processing start position P0, at least part of spatter is discharged to the rear surface side of the sheet metal W, and the spatter tends to be dispersed in a plurality of directions including the rear surface side.

In FIGS. 6A and 6B, the processing start position P0 is not necessarily positioned at the center of the hole formation region Ah0. If the processing start position P0 is positioned at the center of the hole formation region Ah0, the trajectories Tap1 and Tap2 may be semicircles whose diameter is the radius of the hole formation region Ah0. Accordingly, each of the arc-shaped trajectories Tap1 and Tap2 is connected to the trajectory Tcc at a tangent line to the whole circumference trajectory Tcc, and thus the round hole h0 with a highly accurate circular shape is formed at the end he1 or he2 such that the shape is hardly collapsed.

The NC device 50 controls the galvano scanner unit 32 to move the beam spot Bs in a circular manner so as to exceed one round.

The distance between the tip of the nozzle 36 and the surface of the sheet metal W from the start of laser beam irradiation at the processing start position P0 until the formation of the round hole h0 is completed is set as one of the processing conditions in the processing condition file. How many times the beam spot Bs circulates along the whole circumference end is set in a processing program described later.

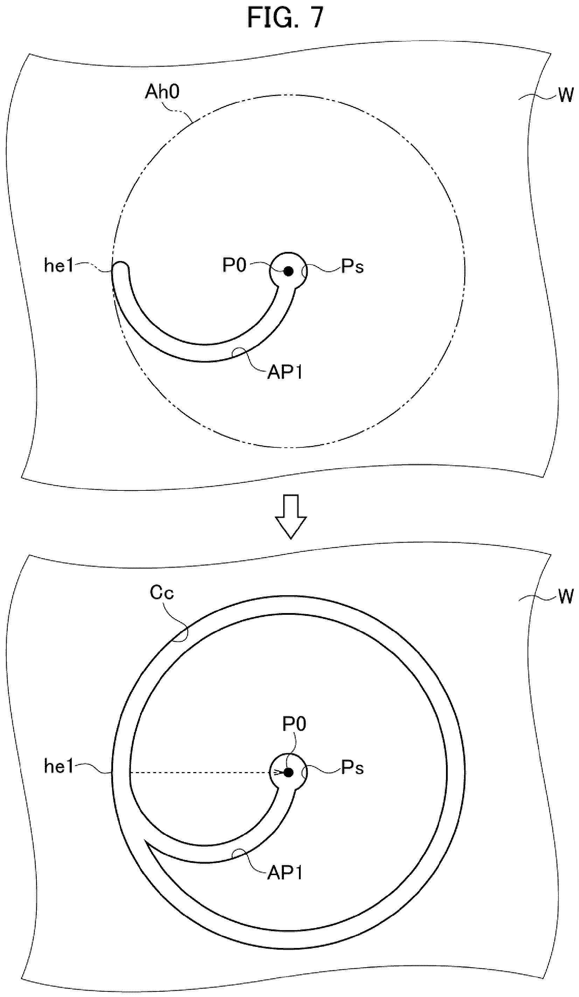

FIG. 7 illustrates a process of forming a pierced hole Ps, an approach AP1, and a whole circumference cutting groove Cc in the sheet metal W in the first example illustrated in FIG. 6A. Since a laser beam is not displaced by, for example, 5 ms at the processing start position P0, the pierced hole Ps is formed at the processing start position P0 of the sheet metal W. In addition, the arc-shaped approach AP1 connected to the pierced hole Ps is formed in the sheet metal W. The approach AP1 is a groove having a width approximately corresponding to the diameter of the beam spot Bs. After the approach AP1 reaches the end he1 of the hole formation region Ah0, the whole circumference end of the hole formation region Ah0 is cut by circulation of the laser beam to form the whole circumference cutting groove Cc. When the approach AP1 is connected to the whole circumference cutting groove Cc at a tangent line to the whole circumference cutting groove Cc, the round hole h0 with a highly accurate circular shape is formed.

In FIG. 7, it is assumed that the NC device 50 controls the laser oscillator 10 so as to turn off the laser beam at the end he1, for example, after the beam spot Bs circulates at an amount of circulation exceeding one round. As indicated by the dashed arrow line, the NC device 50 controls the galvano scanner unit 32 so as to return to the state before the formation of the round hole h0 such that the position irradiated with the laser beam becomes the processing start position P0 if the laser beam is turned on.

The time for which the laser beam is turned on when one round hole h0 is formed in the sheet metal W is determined by a dwell time, a time for forming the approach AP1, and a time for which the beam spot Bs circulates at the whole circumference end of the hole formation region Ah0.

As described above, according to the laser processing machine 100 and the laser processing method executed by the laser processing machine 100, the NC device 50 controls the X-axis carriage 22 and the Y-axis carriage 23 such that the processing head 35 is positionally fixed. In this state, the NC device 50 controls the galvano scanner unit 32 so as to form the round hole h0 having a diameter smaller than the diameter of the opening 36a of the nozzle 36 in the sheet metal W. Therefore, the round hole h0 having a diameter smaller than the diameter of the opening 36a of the nozzle 36 can be formed in the sheet metal W in a short time.

In the laser processing machine 100 and the laser processing method executed by the laser processing machine 100, the distance between the tip of the nozzle 36 and the surface of the sheet metal W is set to 1.0 mm or more and 6.0 mm or less from the start of processing of the round hole h0 until the formation of the round hole h0 is completed. Accordingly, according to the laser processing machine 100 and the laser processing method executed by the laser processing machine 100, the amount of spatter scattered to the nozzle 36 or to the optical components such as a protective glass can be reduced. Therefore, the spatter is hardly deposited in the nozzle 36 or in the optical components, thereby enabling the state to continue the processing for a long time.

In the laser processing machine 100 and the laser processing method executed by the laser processing machine 100, the amount of spatter scattered to the nozzle 36 is further reduced as follows. In the laser processing machine 100 and the laser processing method executed by the laser processing machine 100, a dwell for a predetermined time is set after the laser beam is turned on at the processing start position P0. Accordingly, a recess of at least a predetermined depth (preferably pierced hole Ps) is formed at the processing start position P0, and the beam spot Bs moves so as to form the approach AP1 after the recess or pierced hole Ps is formed. Therefore, the amount of spatter scattered to the nozzle 36 can be further reduced, and the spatter is hardly deposited in the nozzle 36, thereby making it less likely that the optical components will be contaminated.

In addition, in the laser processing machine 100 and the laser processing method executed by the laser processing machine 100, the approach AP1 is formed in an arc shape but not in a straight line shape. Accordingly, spatter is not scattered in one direction because they are scattered while circulating, and thus the directions in which the spatter is scattered are dispersed. Therefore, the amount of spatter scattered to the nozzle 36 can be further reduced, and the spatter is hardly deposited in the nozzle 36, thereby making it less likely that the optical components will be contaminated.

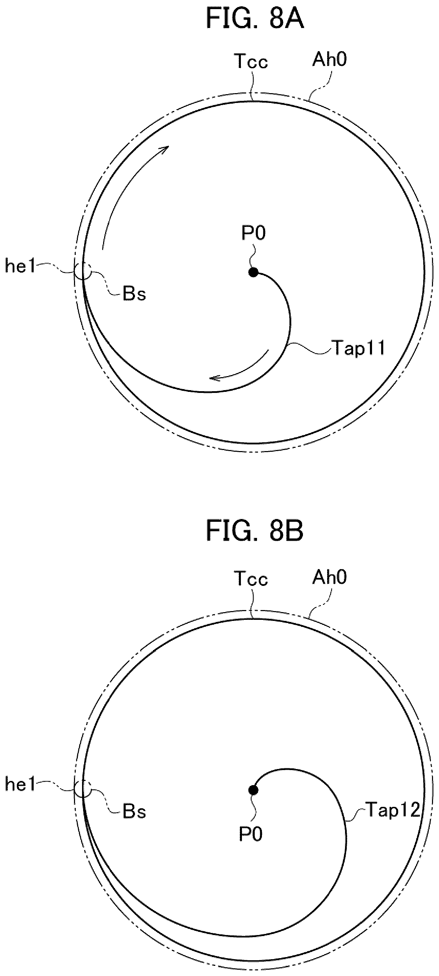

FIGS. 8A to 8D illustrate trajectories Tap11 to Tap14, which are the first to fourth examples of spiral trajectories from the processing start position P0 to the end he1 of the hole formation region Ah0, for forming a spiral approach, instead of the arc-shaped trajectory Tap1 illustrated in FIG. 6A. The NC device 50 controls the galvano scanner unit 32 to displace the beam spot Bs so as to draw the spiral trajectories Tap11 to Tap14. When the spiral approach is formed in the sheet metal W, the directions in which spatter is scattered can be dispersed, thereby reducing the amount of spatter scattered to the nozzle 36.

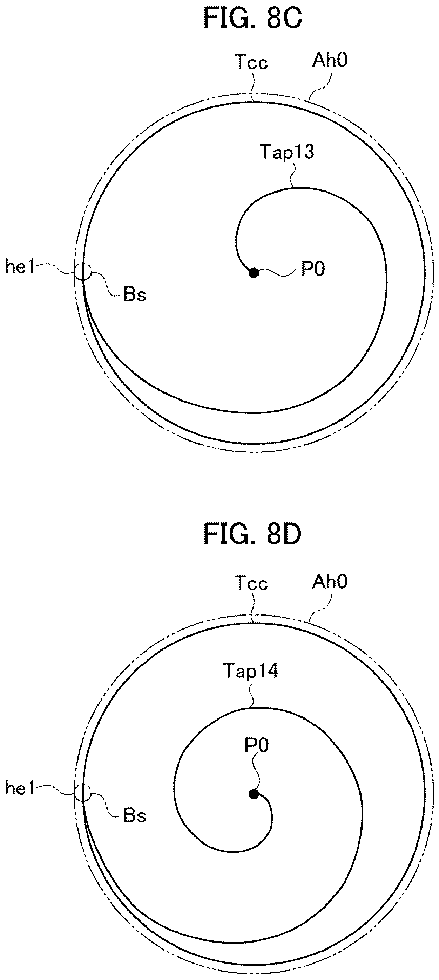

As illustrated in FIGS. 8A to 8D, when the beam spot Bs is moved from the processing start position P0 to the end he1 so as to draw the spiral trajectories Tap11 to Tap14, the ends of the trajectories Tap11 to Tap14 are smoothly connected to the whole circumference trajectory Tcc. Therefore, the round hole h0 with a highly accurate circular shape is formed at the end he1 such that the shape is hardly collapsed. When comparing FIGS. 8A, 8B, 8C and 8D, from the viewpoint of the directions in which spatter is scattered are dispersed, it is preferable that the amount of winding in the spiral be larger, that is, the trajectory Tap14 illustrated in FIG. 8D is most preferable.

In any of FIGS. 6A, 6B, and FIGS. 8A to 8D, it is preferable that the NC device 50 control the galvano scanner unit 32 such that the tip in the approach is connected to the end he1 or he2 from the tangential direction in the end he1 or he2 of the hole formation region Ah0.

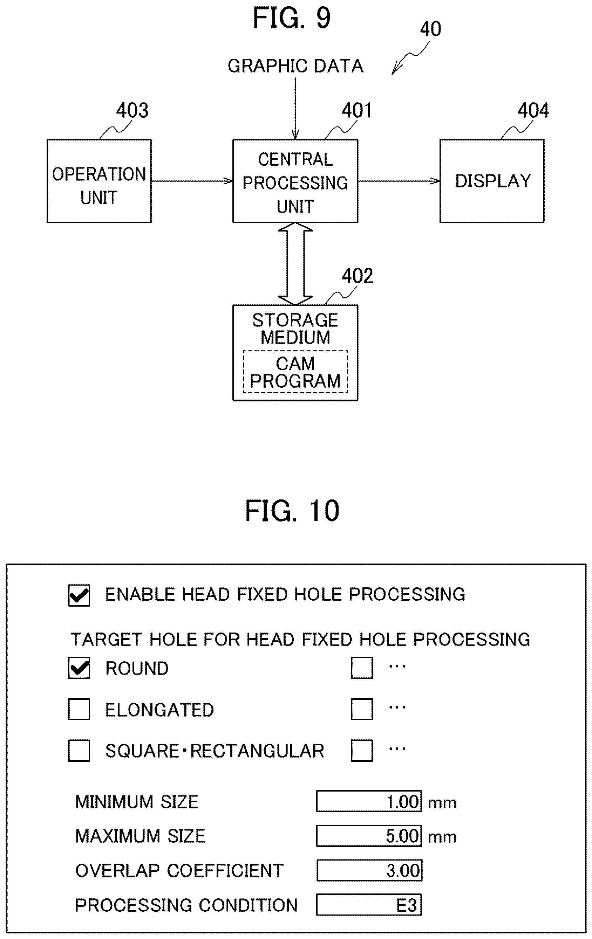

Hereinafter, a processing program creation method and a processing program configuration method according to one or more embodiments will be described with reference to FIGS. 9 to 11. In the processing program creation method and the processing program configuration method according to one or more embodiments, a processing program suitable for the laser processing machine 100 and the laser processing method executed by the laser processing machine 100 described above can be created, and a suitable processing program can be configured.

FIG. 9 illustrates a specific configuration example of the CAM device 40. FIG. 10 illustrates an example of a setting image used by the CAM device 40 at a stage prior to creating a processing program. The CAM device 40 includes a central processing unit 401 (hereinafter, CPU), a nontransitory storage medium 402 that stores the CAM program, an operation unit 403, and a display 404. The CPU 401 executes the CAM program, displays the setting image illustrated in FIG. 10 on the display 404, and creates a processing program according to the settings in the setting image and various conditions. The various conditions include the laser processing machine 100 to be used, a material and a thickness of the sheet metal W, and graphic data of a product having a hole to be produced by cutting the sheet metal W. The graphic data is CAD data created by an unillustrated computer aided design (CAD) device.

In a state in which the processing head 35 is stopped, the processing for forming a hole of a predetermined shape by moving a position on the sheet metal W, which is irradiated with the laser beam, within the range of the opening 36a of the nozzle 36 attached to the tip of the processing head 35 is referred to as head fixed hole processing. In the setting image illustrated in FIG. 10, the operator sets whether to enable or disable the execution of head fixed hole processing by operating the operation unit 403. In FIG. 10, it is possible to enable the execution of head fixed hole processing by checking a box described as "enable the execution of head fixed hole processing".

In the setting image illustrated in FIG. 10, the operator sets the shape of a target hole that enables the execution of the head fixed hole processing by operating the operation unit 403. In the example illustrated in FIG. 10, a round hole, an elongated hole, a square hole and a rectangular hole, and other hole shapes are listed as options. Here, the round hole is checked and the round hole is set as the target hole. In the setting image illustrated in FIG. 10, the operator sets a minimum size and a maximum size of the target hole by operating the operation unit 403. The minimum size may be the smallest diameter which can be pierced, which is determined by the diameter of the beam spot Bs, by the head fixed hole processing. The maximum size may be the largest diameter of the hole that fits within the range of the opening 36a.

In the setting image illustrated in FIG. 10, the operator sets an overlap coefficient by operating the operation unit 403. The overlap coefficient is a coefficient that determines a circulation time for moving a laser beam that is in the ON state along the whole circumference end of the target hole to be formed in the sheet metal W by the head fixed hole processing. In the setting image illustrated in FIG. 10, the operator selects a processing condition number that specifies a processing condition file by operating the operating unit 403.

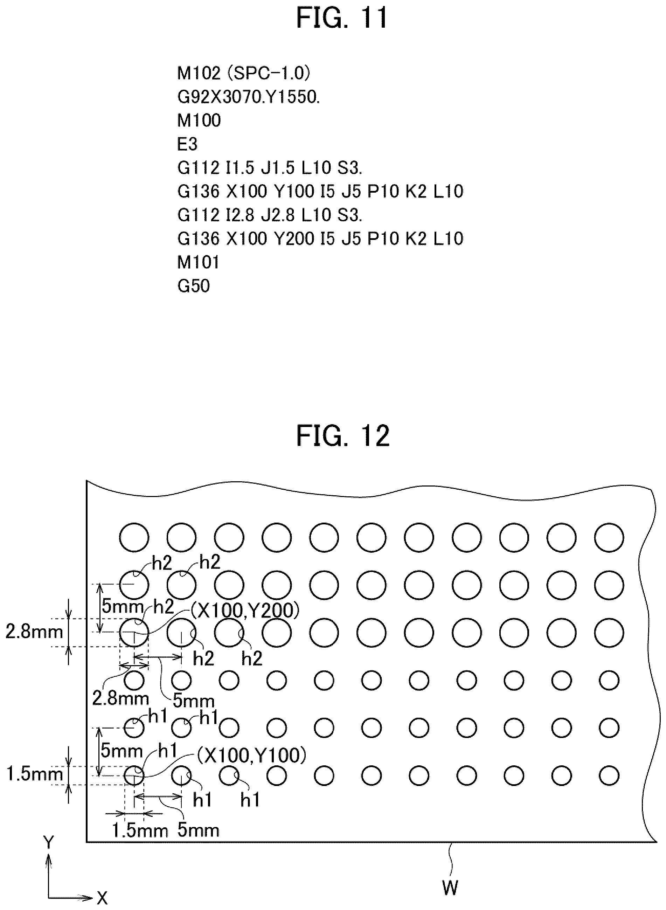

FIG. 11 illustrates an example of a processing program created by the CPU 401 based on the setting image illustrated in FIG. 10 and various conditions. In FIG. 11, M102 specifies the sheet metal W to be processed. Here, the sheet metal W is SPC-1.0 which is a cold-rolled steel sheet with a thickness of 1.0 mm. Although not illustrated in FIG. 10, a material and a thickness of the sheet metal W are selected by operating the operation unit 403. "G92X3070.Y1550." indicates a reference position (origin position) where the processing head 35 is positioned. This is determined by the laser processing machine 100 to be used.

M100 is a code that is automatically set, and indicates the start of a laser mode. E3 is a processing condition number selected in the setting image illustrated in FIG. 10. In the processing condition file of the processing condition number E3 stored in the processing condition database 70, the distance between the tip of the nozzle 36 and the surface of the sheet metal W is set.

G112 in "G112 I1.5 J1.5 L10 S3." is a code for commanding the formation of a round hole. This code is the same as the code for commanding the formation of a round hole in the sheet metal W by moving the processing head 35. The processing for forming a hole of a predetermined shape by moving the processing head 35 that emits a laser beam is referred to as head movement hole processing. In the processing program created by the CAM device 40, the same code for commanding the formation of a hole of a predetermined shape is used for the head movement hole processing and the head fixed hole processing.

I1.5 and J1.5 are address words (first address words) for commanding the formation of a round hole with the size of 1.5 mm in the X-axis direction and the round hole with the size of 1.5 mm in the Y-axis direction, respectively. The size of the round hole is determined by the size of the round hole in the graphic data. The size of the round hole in the graphic data is equal to or greater than the minimum size and equal to or less than the maximum size which are set in the setting image illustrated in FIG. 10. L10 is an address word (second address word) for commanding the execution of the head fixed hole processing. S3 is an address word (third address word) that indicates an overlap coefficient.

Here, how the circulation time is specifically determined by the address word S3 will be described. In FIG. 11, first, a processing program for forming a round hole with a diameter of 1.5 mm is illustrated; however, a case in which a round hole with a diameter of 1.0 mm is formed is taken as an example. The circumference length of the round hole with a diameter of 1.0 mm is 3.14 mm. It is assumed that the processing speed is set to 54000 mm per minute (900 mm/s) in the processing condition file of the processing condition number E3. At this time, the laser beam circulates 286.624 times per second from 900/3.14. Therefore, the time for the laser beam to circulate around the round hole (hole formation region) with a diameter of 1.0 mm is 0.0035 s from 1/287. The address word S3 indicates that the time for the laser beam to circulate around the round hole is multiplied by three. That is, 0.0105 s is obtained from 3 × 0.0035 s.

The reason why the time obtained by multiplying the time for the laser beam to circulate around the round hole by three using the address word S3 is set as the circulation time is as follows: As the diameter of the round hole becomes smaller, the scan mirrors 321 and 323 in the galvano scanner unit 32 are forced to rotate at a lower speed than a maximum rotation angle which is the capacity of the drive units 322 and 324. This is because two axes of the scan mirrors 321 and 323 becomes 0 in speed when the two axes pass through the four inflection points, then if the diameter of the round hole is large, the two axes can accelerate sufficiently between the inflection points where the speed becomes 0, but if the diameter of the round hole is small, the two axes cannot accelerate sufficiently.

In a case where the time obtained by multiplying the time for the laser beam to circulate around the round hole by three is set as the circulation time, even if the diameter of the round hole is small and the scan mirrors 321 and 323 rotate at a rather lower speed than the maximum rotation angle, the galvano scanner unit 32 can make it possible for the laser beam to circulate around the round hole at least once. Here, the round hole is described as an example, but the same applies to holes of other shapes.

G136 in "G136 X100 Y100 I5 J5 P10 K2 L10" is a code for commanding the setting of a grid pattern in which a plurality of round holes are arranged. X100 and Y100 indicate positions where a first round hole is formed. I5 indicates that a pitch in the X-axis direction is 5 mm, J5 indicates that a pitch in the Y-axis direction is 5 mm, P10 indicates that the number of round holes in the X-axis direction is 10, and K2 indicates that the number of round holes in the Y-axis direction is 2. P10 and K2 indicate that 10 more round holes are formed in the X-axis direction and 2 more round holes are formed in the Y-axis direction following the first round hole formed at the positions X100 and Y100. These are determined by the number of round holes in the graphic data and how these round holes are arranged.

Similarly, "G112 I2.8 J2.8 L10 S3." indicates a command to form a round hole with the size of 2.8 mm in the X-axis direction and the size of 2.8 mm in the Y-axis direction using the head fixed hole processing. "G136 X100 Y200 I5 J5 P10 K2 L10" indicates that a first round hole is formed at the positions X100 and Y200, a pitch in the X-axis direction is 5 mm, a pitch in the Y-axis direction is 5 mm, the number of round holes in the X-axis direction is 10, and the number of round holes in the Y-axis direction is 2. M101 indicates the termination of the laser mode, and G50 indicates the termination of the processing program. M101 and G50 are set automatically.

As described above, the processing program creation method according to one or more embodiments, as illustrated in FIG. 10, sets whether to enable or disable the execution of the head fixed hole processing and sets the shape of a target hole that enables the execution of the head fixed hole processing as a stage prior to creating a processing program. Further, the processing program creation method according to one or more embodiments sets a minimum size and a maximum size of the target hole, and sets an overlap coefficient that determines a circulation time for moving a laser beam along the whole circumference end of the target hole.

The processing program creation method according to one or more embodiments creates the processing program as follows when execution of the head fixed hole processing is set to be enabled, and when a specific hole to be formed in the sheet metal W is a target hole, and when the size of the specific hole is equal to or greater than a minimum size and equal to or less than a maximum size. The processing program creation method according to one or more embodiments creates the processing program such that a code for commanding formation of the specific hole includes a statement in which the first address word that specifies the size of the specific hole, the second address word that commands the execution of the head fixed hole processing, and the third address word that indicates the overlap coefficient are linked in a discretionary order.

In the processing program creation method according to one or more embodiments, it is possible to create the processing program suitable for forming a hole within the range of the opening 36a of the nozzle 36 in the sheet metal W by the head fixed hole processing after setting various conditions for executing the head fixed hole processing.

The processing program configuration method according to one or more embodiments configures the processing program as follows. The processing program configuration method according to one or more embodiments configures the processing program such that a code for commanding the formation of a hole used in the head movement hole processing includes a statement in which the first address word, the second address word, and the third address word are linked in a discretionary order.

In the processing program configuration method according to one or more embodiments, it is not necessary to newly define a code for the head fixed hole processing, and the processing program for the head fixed hole processing can be configured using an existing code for commanding the formation of a hole in the sheet metal W by moving the processing head 35.

In the processing program illustrated in FIG. 11, the round hole formed in the sheet metal W is referred to as the hole h1 by the command of "G112 I1.5 J1.5 L10 S3." and "G136 X100 Y100 I5 J5 P10 K2 L10." The hole formed in the sheet metal W is referred to as the hole h2 by the command of "G112 I2.8 J2.8 L10 S3." and "G136 X100 Y200 I5 J5 P10 K2 L10."

FIG. 12 illustrates a state in which a plurality of holes are formed in the sheet metal W by the processing program illustrated in FIG. 11. When the NC device 50 controls the laser processing machine 100 to process the sheet metal W according to the processing program illustrated in FIG. 11, in the sheet metal W, the holes h1 with a diameter of 1.5 mm diameter are formed in three rows and the holes h2 with a diameter of 2.8 mm are formed in three rows, as illustrated in FIG. 12. One row of the holes h1 includes 11 holes h1 with a pitch of 5 mm in the X-axis direction, and three rows of the holes h1 are arranged with a pitch of 5 mm in the Y-axis direction. One row of the holes h2 includes 11 holes h2 with a pitch of 5 mm in the X-axis direction, and three rows of the holes h2 are arranged with a pitch of 5 mm in the Y-axis direction.

The time for forming all the holes h1 and h2 illustrated in FIG. 12 is the sum of the time for forming each hole h1 and each hole h2 in a state in which the processing head 35 is positionally fixed, the time to move the processing head 35 between the adjacent holes h1, the time to move the processing head 35 between the adjacent holes h2, and the time to move the processing head 35 from the last hole h1 to the first h2. The time for forming all the holes h1 and h2 is significantly shorter than the time for forming each hole h1 and each hole h2 while moving the processing head 35 without displacing the laser beam by the galvano scanner unit 32.

The present invention is not limited to one or more embodiments described above, and various modifications can be made to the extent not departing from the scope of the present invention.

The present application claims the priority based on Japanese Patent Application No. 2022-165552 filed with the Japan Patent Office on October 14, 2022, and the entire disclosures of which are incorporated herein by reference.

## Claims

1. A laser processing machine comprising:
a laser oscillator configured to emit a laser beam;
a processing head having a nozzle attached to a tip of the processing head, which emits a laser beam emitted from the laser oscillator from an opening of the nozzle;
a movement mechanism configured to move the processing head along a surface of a material to be cut;
a height adjustment mechanism configured to adjust a position of the processing head in a height direction;
a beam vibration mechanism configured to vibrate a laser beam emitted from the opening within the opening; and
a control device configured to control the laser oscillator, the movement mechanism, the height adjustment mechanism, and the beam vibration mechanism, wherein
when forming a hole that fits within a range of the opening in the material to be cut,
the control device is configured to control:
the movement mechanism such that the processing head is positionally fixed;
the laser oscillator so as to turn on a laser beam at a processing start position in a hole formation region in which the hole is formed;
the beam vibration mechanism so as to form an approach by moving a laser beam from the processing start position to an end of the hole formation region, and to form the hole in the material to be cut by moving a laser beam along a whole circumference end of the hole formation region; and
the height adjustment mechanism such that a distance between a tip of the nozzle and a surface of the material to be cut is set to a fixed distance of 1.0 mm or more and 6.0 mm or less from a processing start of the hole, which starts a laser beam irradiation at the processing start position, until a formation of the hole is completed.

2. The laser processing machine according to claim 1, wherein the control device is configured to control the beam vibration mechanism so as to form an arc-shaped approach from the processing start position to an end of the hole formation region.

3. The laser processing machine according to claim 2, wherein the control device is configured to control the beam vibration mechanism so as to form a semicircle approach whose diameter is a radius of the hole formation region as the arc-shaped approach.

4. The laser processing machine according to claim 1, wherein the control device is configured to control the beam vibration mechanism so as to form a spiral approach from the processing start position to an end of the hole formation region.

5. The laser processing machine according to claim 2 or 4, wherein the control device is configured to control the beam vibration mechanism such that a tip in the approach is connected to the end from a tangential direction in the end of the hole formation region.

6. The laser processing machine according to any one of claims 1 to 4, wherein the control device is configured to control the beam vibration mechanism so as to move a laser beam to an end of the hole formation region after a laser beam irradiation for a predetermined time exceeding 0 at the processing start position.

7. A laser processing method comprising:
stopping a processing head;
setting a distance between a tip of a nozzle attached to the processing head and a surface of a material to be cut to a fixed distance of 1.0 mm or more and 6.0 mm or less;
turning on a laser beam at a processing start position in a hole formation region in which a hole is formed fitting within a range of an opening of the nozzle, and starting a laser beam irradiation at the processing start position;
forming an approach by moving a laser beam from the processing start position to an end of the hole formation region; and
forming the hole in the material to be cut by moving a laser beam along a whole circumference end of the hole formation region.

8. The laser processing method according to claim 7, comprising forming an arc-shaped approach from the processing start position to the end of the hole formation region.

9. The laser processing method according to claim 8, comprising forming a semicircle approach whose diameter is a radius of the hole formation region as the arc-shaped approach.

10. The laser processing method according to claim 7, comprising forming a spiral approach from the processing start position to the end of the hole formation region.

11. The laser processing method according to claim 8 or 10, comprising forming the approach such that a tip in the approach is connected to the end from a tangential direction in the end of the hole formation region.

12. The laser processing method according to any one of claims 7 to 10, comprising moving a laser beam to the end of the hole formation region after a laser beam irradiation for a predetermined time exceeding 0 at the processing start position.

13. A processing program creation method comprising:
when forming a hole of a predetermined shape by irradiating a material to be cut with a laser beam emitted from a processing head, in a state in which the processing head is stopped,
setting whether to enable or disable execution of head fixed hole processing that forms the hole by moving a position on the material to be cut, which is irradiated with the laser beam, within a range of an opening of a nozzle attached to a tip of the processing head;
setting a shape of a target hole that enables execution of the head fixed hole processing;
setting a minimum size and a maximum size of the target hole;
setting a coefficient that determines a circulation time for moving the laser beam that is in an ON state along a whole circumference end of the target hole to be formed in the material to be cut; and
when execution of the head fixed hole processing is set to be enabled, when a specific hole to be formed in the material to be cut is the target hole, and when a size of the specific hole is equal to or greater than a minimum size and equal to or less than a maximum size,
creating a processing program such that a code for commanding formation of the specific hole includes a statement in which a first address word that specifies the size of the specific hole, a second address word that commands the execution of the head fixed hole processing, and a third address word that indicates the coefficient are linked in a discretionary order.

14. A processing program configuration method comprising:
configuring a processing program such that a code for commanding formation of a hole of a predetermined shape in a material to be cut by moving a processing head that emits a laser beam includes a statement in which:
a first address word that specifies a size of the hole;
a second address word that commands execution of head fixed hole processing that forms the hole by moving a position on the material to be cut, which is irradiated with the laser beam, within a range of an opening of a nozzle attached to a tip of the processing head in a state in which the processing head is stopped; and
a third address word that indicates a coefficient that determines a circulation time for moving the laser beam that is in an ON state along a whole circumference end of the target hole to be formed in the material to be cut,
are linked in a discretionary order.
